# EUROPEAN PATENT APPLICATION

(11) **EP 3 748 508 A1**
(43) Date of publication of application: **09.12.2020**
(21) Application number: 20187926.9
(22) Date of filing: 15.09.2014
(51) Int. Cl.: G06F 12/00, G06F 9/50, G06F 9/455

(54) **MEMORY MANAGEMENT IN VIRTUALIZED COMPUTING**

(62) Divisional of application: 14901859.0
(71) Applicant: INTEL Corporation, Santa Clara, CA 95054 (US)
(72) Inventor: ZHANG, Xiantao, Santa Clara, California 95054 (US); XU, Dongxiao, Santa Clara, California 95054 (US)
(74) Representative: Rummler, Felix

(57) **Abstract**

Apparatuses, methods and storage media associated with memory management in virtualized computing are disclosed herein. An apparatus may include a virtual machine manager to manage operations of a plurality of virtual machines, having a memory manager to manage allocation and de-allocation of physical memory to and from the plurality of virtual machines. Allocation and de-allocation may include de-allocation of unused and used physical memory allocated to a first of the plurality of virtual machines to recover physical memory for allocation to one or more other ones of the plurality of virtual machines, and re-allocation of physical memory for the previously de-allocated unused and used physical memory of the first virtual machine.

## Description

### Technical Field

The present disclosure relates to the field of computing, in particular, to apparatuses, methods and storage media associated with memory management in virtualized computing.

### Background

The background description provided herein is for the purpose of generally presenting the context of the disclosure. Unless otherwise indicated herein, the materials described in this section are not prior art to the claims in this application and are not admitted to be prior art by inclusion in this section.

In a virtualization environment, when creating a virtual machine (VM), a host system typically allocates enough memory for the VM. Frequently, the allocated memory is not fully used by the VM. Various memory saving technologies have been developed to free unused memory of the VM for allocation to other VMs, to improve overall system memory usage efficiency, and in turn, overall system performance. However, so far there is no efficient method developed for freeing used memory of VM to further improve system memory usage and performance.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure 1 illustrates a hardware/software view of a computing device incorporated with memory management for virtualized computing of the present disclosure, in accordance with various embodiments.
Figure 2 illustrates a process view of a method for managing memory in virtualized computing, in accordance with various embodiments.
Figure 3 illustrates a graphical view of the method for managing memory in virtualized computing, in accordance with various embodiments
Figure 4 illustrates a component view of an example computer system suitable for practicing the disclosure, in accordance with various embodiments.
Figure 5 illustrates an example storage medium with instructions configured to enable a computing device to practice the present disclosure, in accordance with various embodiments.

### Detailed Description

Apparatuses, methods and storage media associated with memory management in virtualized computing are disclosed herein. In embodiments, an apparatus may include a virtual machine manager to manage operations of a plurality of virtual machines, having a memory manager to manage allocation and de-allocation of physical memory to and from the plurality of virtual machines. Allocation and de-allocation may include de-allocation of unused and used physical memory allocated to a first of the plurality of virtual machines to recover physical memory for allocation to one or more other ones of the plurality of virtual machines, and re-allocation of physical memory for the previously de-allocated unused and used physical memory of the first virtual machine. As a result, more virtual machines may be supported for a given amount of physical memory, or less memory may be required to support a given number of virtual machines.

In embodiments, the memory management technology disclosed herein may be employed by a cloud computing server configured to host a number of virtual machines, or by mobile devices configured to operate with multiple operating systems, e.g., an operating system configured to support phone or tablet computing, such as Android™, and another operating system configured to support laptop computing, such as Windows®.

In the following detailed description, reference is made to the accompanying drawings, which form a part hereof, wherein like numerals designate like parts throughout, and in which is shown, by way of illustration, embodiments that may be practiced. It is to be understood that other embodiments may be utilized and structural or logical changes may be made without departing from the scope of the present disclosure. Therefore, the following detailed description is not to be taken in a limiting sense, and the scope of certain embodiments is defined by the appended claims and their equivalents.

Operations of various methods may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiments. Various additional operations may be performed and/or described operations may be omitted, split or combined in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used hereinafter, including the claims, the term "module" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

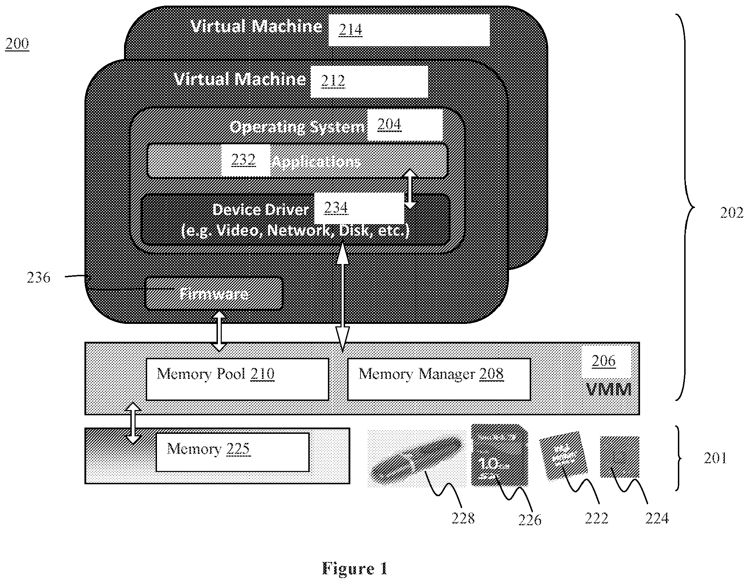

Figure 1 illustrates a software view of a computing device incorporated with memory management for virtualized computing of the present disclosure, in accordance with various embodiments. As shown, computing device 200 may include physical platform hardware 201, which may include, but is not limited to, physical hardware elements such as microprocessors 222, chipsets 224, memory 225, solid-state storage medium 226, input/output devices 228, and so forth. One or more of the microprocessors 222 may be multi-core. Chipsets 224 may include, but are not limited to, memory controllers, and so forth. Memory 225 may include, but is not limited to, dynamic random access memory (DRAM). Solid-state storage medium 226 may include, but is not limited to, storage devices that employ Rapid Storage Technology (RST), available from Intel Corporation of Santa Clara, CA. Input/output devices 228 may include, but are not limited to, keyboard, cursor control device, touch screen, wired and/or wireless communication interfaces.

Software elements 202 may include virtual machine manager (VMM) 206 configured to manage operations of a number of virtual machines, e.g., 212 and 214, hosted by computing device 200. VMM 206 may include memory manager 208 to manage allocation and de-allocation of physical memory 225 to virtual machines 212/214 in support of the virtual memory spaces of virtual machines 212/214. Additionally, memory manager 208 may be configured to manage mapping of the virtual addresses of the virtual memory spaces of virtual machines 212/214 to physical addresses of physical memory 225 to facilitate access of memory locations within memory 225. In embodiments, memory locations of memory 225 may be organized and managed in units of pages, and memory manager 208 may be configured with page tables (not shown) to manage allocation/de-allocation of the resources of memory 225, as well as control access to the allocated resources. Further, memory manager 208 may be configured with memory management techniques that reduce the amount of memory 225 required to support a number of virtual machines 212/214 for a given service level requirement, or support more virtual machines 212/214 at a service level requirement, for a given amount of memory 225, to be further described below.

Each virtual machine 212/214 may include an operating system (OS) 204. OS 204 of each virtual machine 212/214 may be the same or different. Each OS 204 may include firmware 236, device drivers 234 and applications 232. Firmware 236 may be configured to provide basic system input/output services, including, but not limited to, basic services employed for the operation of virtual machine 212/214 prior to the operation of OS 204. Examples of OS 204 may include, but are not limited to, Android™, available from Google, Inc of Mountain View, CA, or Windows®, available from Microsoft Corporation, of Redmond, WA. Examples of device drivers 234 may include, but are not limited to, video drivers, network drivers, disk drivers, and so forth. Examples of applications 232 may include, but are not limited to, web services, Internet portal services, search engines, social networking, news services, games, word processing, spreadsheets, calendars, telephony, imaging, and so forth.

While for ease of understanding, only two virtual machines are illustrated in Figure 1, the present disclosure is not so limited, and it will be apparent to those skilled in the art, from the totality of the description, that the present disclosure may be practiced with computing device 200 hosting any number of two or more virtual machines, limited only by the capacity of the hardware elements and the applications to be executed. At one end, computing device 200 may be a mobile device configured to operate two operating systems. At the other end, computing device 200 may be a high end server in a computing cloud configured to support hundreds or even more virtual machines. Examples of a mobile device configured to operate two operating systems may include, but is not limited to, a mobile device configured to operate with one OS, e.g., Android™, when operating as a computing tablet or mobile phone, or to operate with another OS, e.g., Windows®, when operating as a laptop computer.

Continuing to refer to Figure 1, in embodiments, VMM 206 may be configured to monitor respective state transitions of virtual machines 212/214. For example, VMM 206 may be configured to monitor whether a virtual machine 212/214 is transitioning from an active state, such as a state where at least one application 232 within virtual machine 212/214 is actively executing, to a less active or idle state. What constitutes a less active state may be implementation-dependent, depending on whether the implementation wants to manage the de-allocation/re-allocation aggressively or less aggressively. The least aggressive approach would be to manage the de-allocation/re-allocation based on a virtual machine 212/214 entering or leaving the idle state, i.e., a state wherein applications 232 and OS 204 within virtual machine 212/214 are waiting for work. In embodiments, virtual machine 212/214 may operate in the foreground when it is in an active state, where it is given priority, routed interrupts, and so forth, and may operate in the background when it is in an idle state, where it is not given priority, nor routed interrupts. Virtual machines 212 and 214 may be switched back and forth between foreground and background, depending on activities and/or system events. An example of a system event for a tablet/laptop computer may be the detachment or attachment of the keyboard portion of the tablet/laptop computer from/to the display portion of the tablet/laptop computer.

In embodiments, VMM 206 may be configured to request memory manager 208 to de-allocate unused and used memory of a virtual machine 212/214, in response to a determination that the virtual machine 212/214 is transitioning from an active state to a low activity state or an idle state. Further, VMM 206 may be configured to request memory manager 208 to re-allocate memory to a virtual machine 212/214 to replace the previously de-allocated unused and used memory of a virtual machine 212/214, in response to a determination that the virtual machine 212/214 is transitioning from a low activity or an idle state to an active state.

In embodiments, to facilitate de-allocation of unused memory of a virtual machine 212/214 and re-allocation of memory to replenish previously de-allocated unused memory of the virtual machine 212/214, memory manager 208 may be configured to include an associated driver, and cause the associated driver to be installed in OS 204 of a virtual machine 212/214 (e.g., as one of device drivers 234). In embodiments, the associated driver 234 may be pre-installed in OS 204. In other embodiments, the associated driver 234 may be installed in OS 204 in real time, on instantiation of OS 204. In embodiments, to facilitate de-allocation of used memory of a virtual machine 212/214, and re-allocation of memory for previously de-allocated used memory of the virtual machine 212/214, VMM 206 may be configured to include a memory pool 210. In embodiments, memory pool 210 may be configured as a block device.

In embodiments, VMM 206 may be the first third party driver running from firmware, in particular, firmware configured with Unified Extensible Firmware Interface (UEFI).

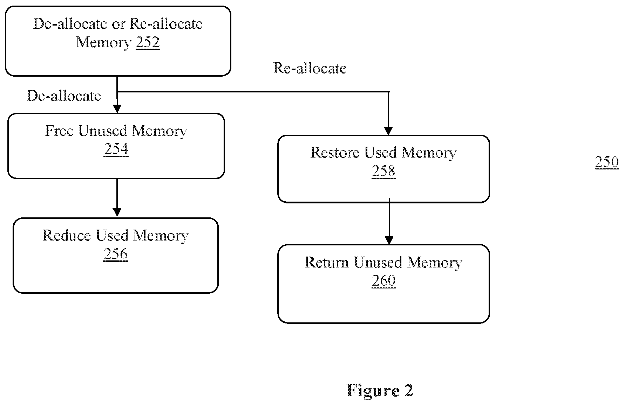

To further describe usage of the associated driver 234 and memory pool 210, refer now also to Figure 2, wherein a process view of the method for managing memory allocation/de-allocation in virtualized computing, in accordance with various embodiments, is shown. As illustrated, process 250 for managing memory allocation/de-allocation in virtualized computing may include operations performed in block 252-260. The operations may be performed, e.g., by memory manager 208 of Figure 1.

Process 250 may start at block 252. At block 252, a determination may be made, e.g., by memory manager 208, on whether a received memory management request is to de-allocate memory allocated to a virtual machine 212/214, or to re-allocate memory to a virtual machine 212/214 for previously de-allocated memory. If the request is to de-allocate memory allocated to a virtual machine 212/214, process 250 may proceed to block 254. On the other hand, if the request is to re-allocate memory to a virtual machine 212/214 for previously de-allocated memory, process 250 may proceed to block 258.

At block 254, the unused memory of the virtual machine 212/214 may be freed, i.e., de-allocated, and made available for allocation to other virtual machines 212/214 hosted by computing device 200. For the earlier described embodiments with memory manager 208 having associated driver 234, as part of the de-allocation process, a request may be made to OS 204, e.g., by memory manager 208, to assign the virtual memory that maps to the unused memory of the virtual machine 212/214 to associated driver 234. On receipt of identifications of the virtual memory of the virtual machine 212/214 having been assigned to driver 234, memory allocation/mapping tables may be updated, to reflect the availability of the recovered memory for allocation to other virtual machines 212/214 hosted by computing device 200. In embodiments, the amount of unused memory freed may vary at the discretion of memory manager 208. In other words, memory manager 208 may ascertain, e.g., through the special driver 234 it caused to be installed, the amount of unused memory available, and request all or a portion to be assigned/freed. From block 254, process 250 may proceed to block 256.

At block 256, the used memory of the virtual machine 212/214 may be partially freed, i.e., partially de-allocated, and made available for allocation to other virtual machines 212/214 hosted by computing device 200. More specifically, as part of the de-allocation process, a portion of memory pool 210 may be allocated to the virtual machine 212/214, to replace (swap for) the used memory of the virtual machine 212/214. Data in the used memory being swapped may be compressed, and copied into the portion of memory pool 210, thereby allowing the used memory of the virtual machine 212/214 to be freed for allocation to other virtual machines 212/214 hosted by computing device 200. Typically, by virtue of compression, the (swap in) area in memory pool 210 will be smaller than the used memory being de-allocated. The amount of reduction may depend on a particular compression technique employed.

From block 256, the process may terminate.

At block 258, the previously partially de-allocated used memory of the virtual machine 212/214 may be replenished. More specifically, as part of the re-allocation process, a new area of memory 225 may be allocated to the virtual machine 212/214 being resumed, to replace (swap for) the used memory of the virtual machine 212/214. Data in the used memory may be decompressed, and copied into the new area of memory 225 being newly allocated to the virtual machine 212/214, thereby restoring the data in the used memory, enabling the virtual machine 212/214 to resume operation. Typically, the new area of memory 225 being allocated (swap in) will be larger than the replaced (swap out) area. From block 258, process 250 may proceed to block 260.

At block 260, the previously de-allocated unused memory of the virtual machine 212/214 may be restored, i.e., re-allocated. For the earlier described embodiments with memory manager 208 having associated driver 234, as part of the re-allocation process, in addition to updating the memory allocation/mapping table, a request may be made to OS 204, e.g., by memory manager 208, to un-assign from associated driver 234 the virtual memory that maps to the unused memory of the virtual machine 212/214, thereby allowing the unused memory of the virtual machine 212/214 to be available for use by applications 232 or OS 204 of the virtual machines 212/214.

From block 260, the process may terminate.

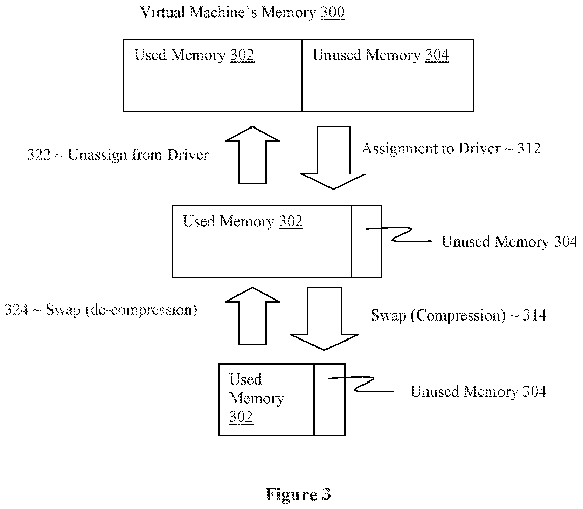

Figure 3 illustrates a graphical view of the memory management technique for virtualized computing, in accordance with various embodiments. As shown in the top portion of Figure 3, and described earlier, at a first state, e.g., an active state, a virtual machine may have memory 300, of which a portion is used, used memory 302, and a portion is unused, unused memory 304. To recover memory from the virtual memory, unused memory 304 is first freed, e.g., via the associated driver assignment technique 312 earlier described. As illustrated in the middle portion of Figure 3, on recovery of the unused memory 304, the total amount of memory allocated to the virtual machine is reduced.

Thereafter, a portion of the used memory 302 is also freed, through, e.g., the earlier described compressed and swap technique 314. As illustrated in the lower portion of Figure 3, on partial recovery of the used memory 302, the total amount of memory allocated to the virtual machine is further reduced.

The process is reversed when the previously de-allocated used and unused memory 302 and 304 are replenished, with the used memory 302 being restored first, followed by the unused memory 304, going from the lower portion of Figure 3 to the top portion of Figure 3.

In an example application of the present disclosure to a dual OS computing device having Android™ and Windows®, potential substantial saving was observed. On initialization, Windows® was created on top of Android™ with 1GB of memory assigned to Windows®, and about 450MB used. When Windows® is not used actively, ∼500MB of the unused memory was first freed and made available to Android™ as earlier described. Thereafter, another ∼300MB of the 450MB used memory may be further freed as earlier described, resulting in almost 800MB of memory being freed for use by Android™ to improve its performance.

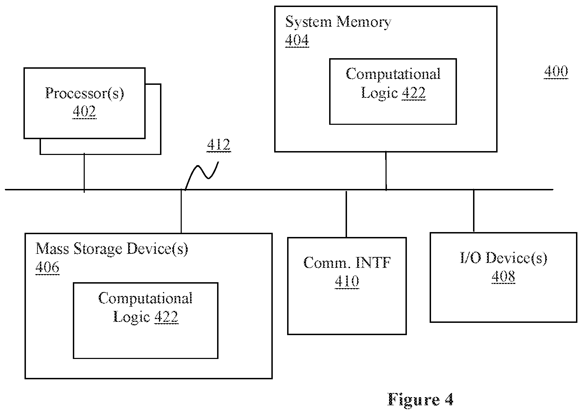

Referring now to Figure 4, wherein an example computer suitable for use for the arrangement of Figure 1, in accordance with various embodiments, is illustrated. As shown, computer 400 may include one or more processors or processor cores 402, and system memory 404. In embodiments, multiples processor cores 402 may be disposed on one die. For the purpose of this application, including the claims, the terms "processor" and "processor cores" may be considered synonymous, unless the context clearly requires otherwise. Additionally, computer 400 may include mass storage device(s) 406 (such as diskette, hard drive, compact disc read only memory (CD-ROM) and so forth), input/output device(s) 408 (such as display, keyboard, cursor control and so forth) and communication interfaces 410 (such as network interface cards, modems and so forth). In embodiments, a display unit may be touch screen sensitive and includes a display screen, one or more processors, storage medium, and communication elements, further it may be removably docked or undocked from a base platform having the keyboard. The elements may be coupled to each other via system bus 412, which may represent one or more buses. In the case of multiple buses, they may be bridged by one or more bus bridges (not shown).

Each of these elements may perform its conventional functions known in the art. In particular, system memory 404 and mass storage device(s) 406 may be employed to store a working copy and a permanent copy of the programming instructions implementing the operations described earlier, e.g., but not limited to, operations associated with VMM 206 (including memory manager 208), denoted as computational logic 422. The various elements may be implemented by assembler instructions supported by processor(s) 402 or high-level languages, such as, for example, C, that can be compiled into such instructions.

The permanent copy of the programming instructions may be placed into permanent mass storage device(s) 406 in the factory, or in the field, through, for example, a distribution medium (not shown), such as a compact disc (CD), or through communication interface 410 (from a distribution server (not shown)). That is, one or more distribution media having an implementation of the agent program may be employed to distribute the agent and program various computing devices.

The number, capability and/or capacity of these elements 410-412 may vary, depending on the intended use of example computer 400, e.g., whether example computer 400 is a smartphone, tablet, ultrabook, laptop or a server. The constitutions of these elements 410-412 are otherwise known, and accordingly will not be further described.

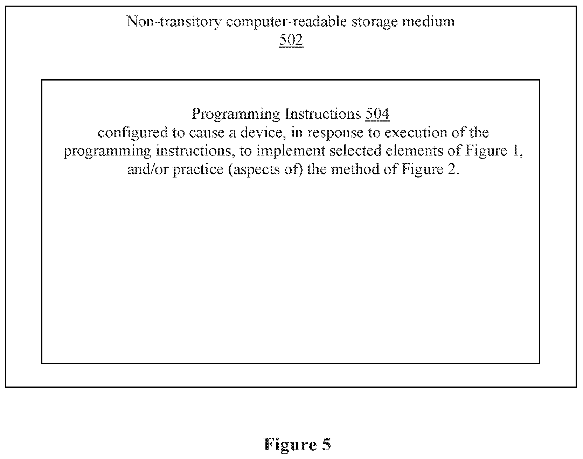

Figure 5 illustrates an example non-transitory computer-readable storage medium having instructions configured to practice all or selected ones of the operations associated with VMM 206 (including memory manager 208), earlier described, in accordance with various embodiments. As illustrated, non-transitory computer-readable storage medium 502 may include a number of programming instructions 504. Programming instructions 504 may be configured to enable a device, e.g., computer 400, in response to execution of the programming instructions, to perform, e.g., various operation associated with VMM 206 (including memory manager 208) of Figure 1 or various operations of method 250 of Figure 2 respectively. In alternate embodiments, programming instructions 504 may be disposed on multiple non-transitory computer-readable storage medium 502 instead. In still other embodiments, programming instructions 504 may be encoded in transitory computer readable signals.

Referring back to Figure 4, for one embodiment, at least one of processors 402 may be packaged together with a memory having computational logic 422 (in lieu of storing in system memory 404 and/or mass storage device 406) configured to practice all or selected ones of the operations associated with VMM 206 (including memory manage 208) of Figure 1, or aspects of process 250 of Figure 2. For one embodiment, at least one of processors 402 may be packaged together with a memory having computational logic 422 to form a System in Package (SiP). For one embodiment, at least one of processors 402 may be integrated on the same die with a memory having computational logic 422. For one embodiment, at least one of processors 402 may be packaged together with a memory having computational logic 422 to form a System on Chip (SoC). For at least one embodiment, the SoC may be utilized in, e.g., but not limited to, a hybrid computing tablet/laptop.

Accordingly, embodiments for manage memory for virtualized computing have been described. Example embodiments may include:
Example 1 may be an apparatus for virtualized computing. The apparatus may comprise: one or more processors; physical memory coupled with the one or more processors; and a virtual machine manager. The virtual machine manager may be operated by the one or more processors to manage operations of a plurality of virtual machines, having a memory manager to manage allocation and de-allocation of the physical memory to and from the plurality of virtual machines, which may include: de-allocation of unused and used physical memory allocated to a first of the plurality of virtual machines to recover physical memory for allocation to other one or ones of the plurality of virtual machines, and re-allocation of physical memory to replenish previously de-allocated unused and used physical memory of the first virtual machine.
Example 2 may be example 1, wherein the memory manager may perform the de-allocation or the re-allocation in response to a request.
Example 3 may be example 2, wherein the virtual machine manager may make the request in response to a determination that the first virtual machine is entering or leaving a particular state.
Example 4 may be example 3, wherein the virtual machine manager may make the request in response to a determination that the first virtual machine is entering or leaving an idle or background state.
Example 5 may be example 3, wherein the virtual machine manager may further monitor state transitions of the plurality of virtual machines.
Example 6 may be any one of examples 1-5, wherein the memory manager may further cause a driver to be installed in an operating system of the first virtual machine, and to request the operating system to assign unused virtual memory addresses of the first virtual machine to the driver as part of the de-allocation of unused physical memory from the first virtual machine.
Example 7 may be example 6, wherein the memory manager may further request the operating system to un-assign the virtual memory addresses of the first virtual machine assigned to the driver as part of the re-allocation of the physical memory for the previously de-allocated unused physical memory of the first virtual machine.
Example 8 may be any one of examples 1-7, wherein the memory manager may further compress data in the used physical memory and copy the data after compression into a memory pool of the virtual machine manager as part of the de-allocation of used physical memory from the first virtual machine.
Example 9 may be example 8, wherein the memory manager may further decompress the compressed data copied into the memory pool, and copy the data after decompression back into physical memory allocated to the first virtual machine as part of the re-allocation of the physical memory for the previously de-allocated unused physical memory of the first virtual machine.
Example 10 may be example 1-9, wherein the apparatus is a selected one of a mobile device or a cloud computing server.
Example 11 is an example method for virtualized computing. The method may comprise: de-allocating, by a computing system, unused and used physical memory allocated to a first of a plurality of virtual machines of the computing system to recover physical memory for allocation to other one or ones of the plurality of virtual machines; and re-allocating, by the computing system, physical memory to replenish previously de-allocated unused and used physical memory of the first virtual machine.
Example 12 may be example 11, wherein de-allocating or re-allocating may be performed in response to a request.
Example 13 may be example 12, wherein the request may be made in response to a determination that the first virtual machine is entering or leaving a particular state.
Example 14 may be example 13, wherein the request may be made in response to a determination that the first virtual machine is entering or leaving an idle or background state.
Example 15 may be example 13, further comprising monitoring, by the computing system, state transitions of the plurality of virtual machines.
Example 16 may be any one of examples 11-15, further comprising a virtual machine manager of the computing system causing a driver to be installed in an operating system of the first virtual machine, and requesting the operating system to assign unused virtual memory addresses of the first virtual machine to the driver as part of de-allocating unused physical memory from the first virtual machine.
Example 17 may be example 16, further comprising requesting, by the computing system, the operating system to un-assign the virtual memory addresses of the first virtual machine assigned to the driver as part of re-allocating the physical memory for the previously de-allocated unused physical memory of the first virtual machine.
Example 18 may be any one of examples 11-17, further comprising compressing, by the computing system, data in the used physical memory and copying the data after compression into a memory pool of a virtual machine manager of the computing system as part of de-allocating used physical memory from the first virtual machine.
Example 19 may be example 18, further comprising decompressing, by the computing system, the compressed data copied into the memory pool, and copying the data after decompression back into physical memory allocated to the first virtual machine as part of re-allocating the physical memory for the previously de-allocated unused physical memory of the first virtual machine.
Example 20 may be any one of examples 11-19, wherein the computing system is a selected one of a mobile device or a cloud computing server.
Example 21 is one non-transitory computer-readable storage medium having instructions that cause a computer system, in response to execution of the instructions by a computer system, to: de-allocate unused and used physical memory allocated to a first of a plurality of virtual machines of the computer system to recover physical memory for allocation to other one or ones of the plurality of virtual machines, and re-allocate physical memory to replenish previously de-allocated unused and used physical memory of the first virtual machine.
Example 22 may be example 21, wherein de-allocate or re-allocate may be performed in response to a request.
Example 23 may be example 22, wherein the request may be made in response to a determination that the first virtual machine is entering or leaving a particular state.
Example 24 may be example 23, wherein the request may be made in response to a determination that the first virtual machine is entering or leaving an idle or background state.
Example 25 may be example 23, wherein the computer system may be further caused to monitor state transitions of the plurality of virtual machines.
Example 26 may be any one of examples 21-25, wherein the computer system may be further caused to have a virtual machine manager of the computer system cause a driver to be installed in an operating system of the first virtual machine, and to request the operating system to assign unused virtual memory addresses of the first virtual machine to the driver as part of the de-allocation of unused physical memory from the first virtual machine.
Example 27 may be example 26, wherein the virtual machine manager may be further caused to request the operating system to un-assign the virtual memory addresses of the first virtual machine assigned to the driver as part of the re-allocation of the physical memory for the previously de-allocated unused physical memory of the first virtual machine.
Example 28 may be any one of examples 21-27, wherein the computer system may be further caused to compress data in the used physical memory and copy the data after compression into a memory pool of a virtual machine manager of the computer system as part of the de-allocation of used physical memory from the first virtual machine.
Example 29 may be example 28, wherein the computer system may be further caused to decompress the compressed data copied into the memory pool, and copy the data after decompression back into physical memory allocated to the first virtual machine as part of the re-allocation of the physical memory for the previously de-allocated unused physical memory of the first virtual machine.
Example 30 may be any one of examples 21-29, wherein the computer system may be a selected one of a mobile device or a cloud computing server.
Example 31 may be an apparatus for virtualized computing. The apparatus may comprise: means for de-allocating unused and used physical memory allocated to a first of a plurality of virtual machines of the computing system to recover physical memory for allocation to other one or ones of the plurality of virtual machines; and means for re-allocating physical memory to replenish previously de-allocated unused and used physical memory of the first virtual machine.
Example 32 may be example 31, wherein de-allocating or re-allocating may be performed in response to a request.
Example 33 may be example 32, wherein the request may be made in response to a determination that the first virtual machine is entering or leaving a particular state.
Example 34 may be example 33, wherein the request may be made in response to a determination that the first virtual machine is entering or leaving, an idle or background state.
Example 35 may be example 33, further comprising means for monitoring state transitions of the plurality of virtual machines.
Example 36 may be any one of examples 31-35, further comprising means for causing driver to be installed in an operating system of the first virtual machine, and requesting the operating system to assign unused virtual memory addresses of the first virtual machine to the driver as part of de-allocating unused physical memory from the first virtual machine.
Example 37 may be example 36, further comprising means for requesting the operating system to un-assign the virtual memory addresses of the first virtual machine assigned to the driver as part of re-allocating the physical memory for the previously de-allocated unused physical memory of the first virtual machine.
Example 38 may be any one of examples 31-38, further comprising means for compressing data in the used physical memory and copying the data after compression into a memory pool of a virtual machine manager of the computing system as part of de-allocating used physical memory from the first virtual machine.
Example 39 may be example 38, further comprising means for decompressing the compressed data copied into the memory pool, and copying the data after decompression back into physical memory allocated to the first virtual machine as part of re-allocating the physical memory for the previously de-allocated unused physical memory of the first virtual machine.
Example 40 may be any one of examples 31-39, wherein the apparatus may be a selected one of a mobile device or a cloud computing server.

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims.

Where the disclosure recites "a" or "a first" element or the equivalent thereof, such disclosure includes one or more such elements, neither requiring nor excluding two or more such elements. Further, ordinal indicators (e.g., first, second or third) for identified elements are used to distinguish between the elements, and do not indicate or imply a required or limited number of such elements, nor do they indicate a particular position or order of such elements unless otherwise specifically stated.

## Claims

1. An apparatus for virtualized computing, comprising:
one or more processors;
physical memory coupled with the one or more processors; and
a virtual machine manager to be operated by the one or more processors to manage operations of a plurality of virtual machines operated by the one or more processors, that includes management of allocation and de-allocation of portions of the physical memory to and from the plurality of virtual machines, including:
de-allocation of a portion of the physical memory allocated to a first of the plurality of virtual machines to recover the portion of the physical memory for allocation to another virtual machine, and
re-allocation of the de-allocated portion of the physical memory to the other virtual machine;
wherein to de-allocate the portion of the physical memory allocated to the first of the plurality of virtual machines and re-allocate the portion of the physical memory to another virtual machine, the virtual machine manager is to compress data in the portion of the physical memory being de-allocated, and make a copy of the compressed data, prior to re-allocation of the portion of the physical memory to the other virtual machine.

2. The apparatus of claim 1, wherein the virtual machine manager is to perform the de-allocation and re-allocation in response to a request.

3. The apparatus of claim 2, wherein the request is made in response to a virtual machine entering or leaving a particular state.

4. The apparatus of any preceding claim, wherein the apparatus is a cloud computing server.

5. The apparatus of any preceding claim, wherein said de-allocation comprises de-allocation of a portion of the physical memory currently being used by the first of the plurality of virtual machines.

6. A method for virtualized computing, comprising:
managing, by a virtual machine manager of a computer system, operations of a plurality of virtual machines of the computer system; and
de-allocating, by the virtual machine manager, a portion of physical memory of the computer system allocated to a first of the plurality of virtual machines to recover the portion of the physical memory for allocation to another virtual machine; and
re-allocating, by the virtual manager, the recovered portion of the physical memory to the other virtual machine;
wherein de-allocating the portion of the physical memory allocated to the first of the plurality of virtual machines and re-allocating the physical memory to another virtual machine comprises compressing data in the portion of the physical memory being de-allocated, and making a copy of the compressed data, prior to re-allocating the portion of the physical memory to the other virtual machine.

7. The method of claim 6, wherein the de-allocating and re-allocating is performed in response to a request.

8. The method of claim 7, wherein the request is made in response to a virtual machine entering or leaving a particular state.

9. The method of any of claims 6 to 8, wherein the computing system is a cloud computing server.

10. The method of any of claims 6 to 9, wherein said de-allocating comprises de-allocating a portion of the physical memory currently being used by the first of the plurality of virtual machines.

11. At least one non-transitory computer-readable storage medium having instructions that cause a computer system, in response to execution of the instructions by one or more processors of the computer system, to operate a virtual machine manager to carry out the method of any of claims 6 to 10.
